# EUROPEAN PATENT SPECIFICATION

(11) **EP 3 489 119 B1**
(45) Date of publication and mention of the grant of the patent: **08.05.2024**
(21) Application number: 18208990.4
(22) Date of filing: 28.11.2018
(51) Int. Cl.: B62J 6/16, B62J 6/165, B62J 6/029, B62J 6/03, B62J 6/04

(54) **LIGHTING ASSEMBLY AND CONTROL UNIT FOR GEAR CHANGE OF A BICYCLE**
BELEUCHTUNGSEINHEIT UND STEUEREINHEIT FÜR FAHRRADGANGSCHALTUNGSHEBEL
ENSEMBLE D'ÉCLAIRAGE ET UNITÉ DE COMMANDE POUR LEVIER DE CHANGEMENT DE VITESSE D'UN VÉLO

(30) Priority: 28.11.2017 IT 201700136602
(43) Date of publication of application: 29.05.2019
(73) Proprietor: Petrone, Giovanna, 30030 Martellago (VE) (IT); Trabacchin, Giovanni, 30030 Martellago (VE) (IT)
(72) Inventor: TRABACCHIN, Giovanni, 30030 Martellago (VE) (IT); MAMPRIN, Massimo, 30174 Venezia (IT)
(74) Representative: Locas, Davide

(56) References cited:
- WO-A1-2012/056425
- DE-A1-102009 005 777
- US-A1- 2007 193 497

## Description

The present invention relates to a lighting assembly for a control unit for a gear change for two or three wheel vehicles.

Within the technical sector of bicycles and, in general, of human powered vehicles, several solution are known for providing the vehicles with light signaling devices.

For example, US Application 4,204,191 and US Application 8,803,674 describe a bicycle comprising of a lighting indication system fixed to the handlebars and to the rear cargo rack. Both the front and back lights are connected through a wired system that runs along the frame of the bicycle.

Another example is represented by US 5,247,431 that describes the light signaling system realized through two units corresponding respectively to the right and left direction signals, which can be inserted into the tube of the handle at opposite ends. Other examples of solutions for light signaling devices for bicycles, albeit not made to be turn signals, are described in US 8,870,421, US 5,561,414, EP 1884 455, US 2010/0141146, WO2012/056425 or US 2007/193497.

WO 2012/056425, which discloses the features of the preamble of claim 1, relates to a brake control assembly for motorcycles comprising LED lamps on the oil reservoir formed above the control lever.

US 2007/193497 discloses a bicycle shift control device includes a shifter housing, a shift control mechanism and a bicycle light structure. The shift control mechanism is coupled to the shifter housing. The bicycle light structure includes a bicycle location light that is arranged and configured to project light outwardly from the shifter housing at a location remote from a gear position indicator.

On a general level, known solutions are not adequate for their use in racing bikes, either because they requiring the presence of brackets or other fixing systems the rendered their usage little desirable for the cyclist, because they can be easily hidden by the hand of the user or because their presence would not allow a proper use of the brake lever or of the gear change unit during races.

A signaling device for a bicycle the uses LED lights is also described in US 2016/096570. In this case, the LED lights are placed on a strip fixed to the gear brake and it is the object to indicate specific operating conditions of the vehicle to the cyclist, such as the selected gear.

This such signaling system is however clearly designated to be seen by the cyclist only as it is positioned in such a way that it is covered by the cyclist's hand when the brake is squeezed.

A further drawback of known solutions is represented by the fact that they do not allow retrofitting of existing control devices, rather requiring to completely substituted the device for providing the required light effect.

Therefore, the technical problem that underlies in the present invention is to create a system of lighted signaling that at least partially overcomes one or more of the aforementioned issues referring to their technical note.

It is the further scope of this invention to provide a light signaling system that is particularly suitable for racing bicycles.

It is also the scope of this invention to provide a light signaling system that is particularly suitable for multiple gear bicycles.

It is even further scope of this invention to provide a light signaling system that doesn't require a complex method of fastening that is visibly unappealing and is not easily subjected to damages.

This problem is solved and these scopes are reached by a lighting assembly according to claim 1 and by the control unit according to claim ..

It will be appreciated that the assembly and the control unit of the present invention can be easily mounted on a racing bike.

In addition, the present invention provides a light signaling device that is easily visible while the bicycle is in use.

Furthermore, the use of flexible covering allow to easily install the light signaling device on existing gear change control units without requiring modification of the existing layout. In particular, while known devices comprises a rigid shell, the use of a flexible covering allows to fit the assembly of the invention either above an existing control devices or in their substitution.

According to the invention, the lighted device is an intermittent type. In this way, the invention can be advantageously used as directional indicator for the bicycle.

The connecting element is being configured such that it is connected to the covering case of the control unit onto which the assembly is used by means of a shape coupling. This feature makes it easy to attach the assembly to the control unit.

The control device is fixed to the flexible covering, in a way in which it is easily accessible by the user's hand, as long as the control unit is placed in an easily accessible area.

In some embodiment, the control unit comprises of at least one push button so that lighting device can be easily operated.

According to other aspect of the invention, it relates also to a gear change control unit comprising an assembly as previously defined.

Preferably, the connecting element is placed in such a way that the lighted device is configured to be above the support.

In this way, the lighted device is placed in a position particularly visible and remains visible even when the user is operating the brake or is changing speed.

According to the preferred embodiments, the assembly further comprises of a device that allows to connect to another lighting device so that the control device can simultaneously control the on and/or off switching of both the lighting device as well as an additional lighted device.

This feature makes it possible to use the assembly and the pertaining features also for the usage of further lighting devices, for example, those that are intended to be placed on the rear part of the bicycle.

Preferably, the connecting device consists a transmitting/receiving unit without wires for the transmission of the control signal generated through the control button in a way to avoid the unnecessary wiring in the event other lightened devices are then used.

In preferred embodiments, the bicycle's switch gear for speed, the lighted device flashes. In that way, the invention can be advantageously utilized as the direction indicator on the bicycle.

Preferably, the drive assembly is comprised of a support connected to the connecting portion and to which a control lever for handling the bicycle brake and / or an drive element for the gear change unit is hinged; the lighted device is being propped up on the support.

Preferably, while in use, the lighting device extends above the support.

Thanks to such features, the lighting device is placed in a visible area and remains visible even when the user is using the brake or is changing gears.

According to the preferred embodiments, the lighting device is fitted by means of a shape coupling on the support in such a way so that it produces a lighted beam facing in the direction in which the user is headed. In this manner, the beam of light produced by the lighted device allows that the user can be easily seen by another vehicle that is in front of the bicycle.

In preferred embodiments, the control button consists of at least one trigger button so that the lighted device is easily reachable.

According to preferred embodiments, the control unit comprises of a connecting device capable of connecting the control device to one or more additional lighting devices so that the control device can simultaneously control the on and/or off switch of both the lighted device and of the additional lighting devices.

Such feature allows for the use of the control unit and its pertaining features as well as the usage of other lighted devices, for example, that are meant to be placed on the rear part of the bicycle.

Preferably, the connecting device comprises of a wireless transmitting device for the transmission of the control signal that is generated by the control unit in order to avoid the necessary wiring if other lighting devices are then used.

In some embodiments, in the signaling system of the present invention the additional lighting device is housed in a compartment made in the bicycle. This feature consists of integrating the additional lighting device in the frame or in another area of the bicycle without requiring specific connecting elements, in order to make the solution rather resilient as well as esthetically pleasing.

Furthermore, in this way, the aerodynamics of the bicycle are not overly hindered because of the additional presence of the lighting device.

Preferably, the housing slot is placed in correspondence with the vertical lining of the rear of the bicycle.

In preferred embodiments, the housing slot is placed in correspondence with the seat support.

Preferably, the housing slot is placed in correspondence with the seat.

According to a further aspect, the housing slot is made at the post of the seat. Accordingly, a further lighting device can be fixed in specific visible areas. In addition, as much as it can be placed on the vertical lining, it can be easily distinguished if the lighting device is placed on the left or the right side of the vehicle so that it can signal forwardly in a clear way so that other vehicles that are behind can see.

Preferably, the additional lighting device can be fixed or is fixable to a rear cargo rack in a way that it does not require further modifications to the bicycle. According to preferred method of production, the additional lighting device is fixed or is fixable to the pulled cart from the bicycle.

According to a further aspect, the invention also refers to a towable wagon by the bicycle in which it is fixed to the lighting device. Preferably, the lighting device consists of one of more of the previously mentioned features.

The characteristic features and further advantages of the present invention are set out in the following detailed description of a preferred, but not exclusive, embodiment shown by way of non-limiting example in the accompanying drawings, in which:
- Figures 1 and 1A are respectively a perspective view and a respective detail of the bicycle that consists of a light signaling system according to the present invention
- Figure 2 is a perspective view of an assembly for the control unit of the gear change according to the present invention;
- Figure 2A is a perspective view of a gear change control units designed to receive the assembly according to the present invention;
- Figures 3 and 4 are respectively a perspective view and an exploded view of a gearbox control unit according to the present invention;
- Figures 5 and 5A respectively a perspective view and a respective bicycle frame detail on which a light signaling system is installed according to the present invention;
- Figures 6 and 6A are respectfully a prospective view and a detail of the bicycle frame on which the light signaling system of the present invention, realized by an alternative embodiment, is installed;
- Figures 7 and 7A are respectively a prospective view of a detail of the bicycle frame on which a light signaling system is installed on the frame of the bike which is realized according to an alternative embodiment;
- Figure 8 is a prospective view of the seat on which the light signaling system of the present invention is installed;
- Figure 9 is a prospective view of the rear cargo rack on which the light signaling system of the present invention is installed;
- Figure 10 and 11 are two prospective views that illustrate two different embodiments of the bicycle with a relative wagon on which the light signaling system of the present invention is installed.

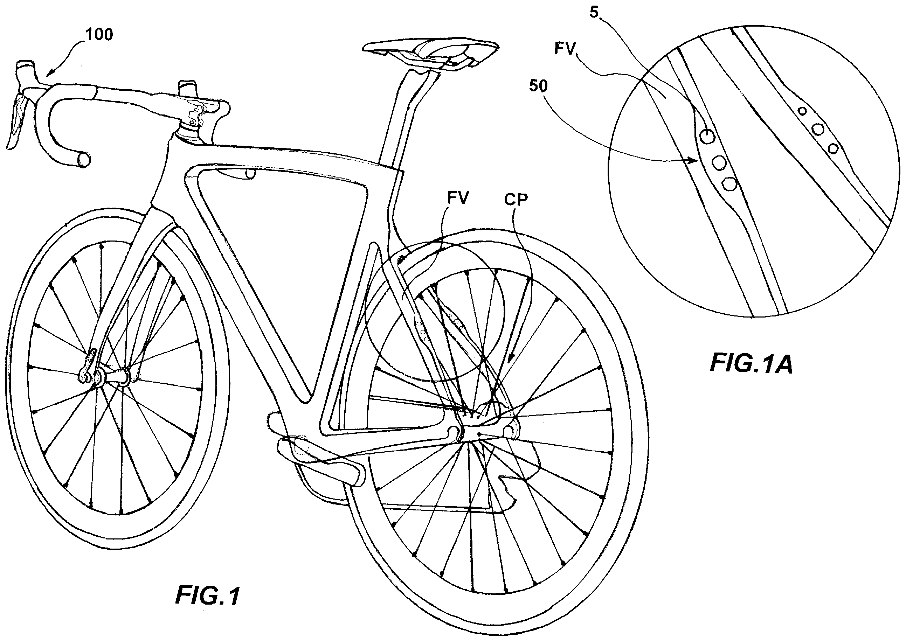

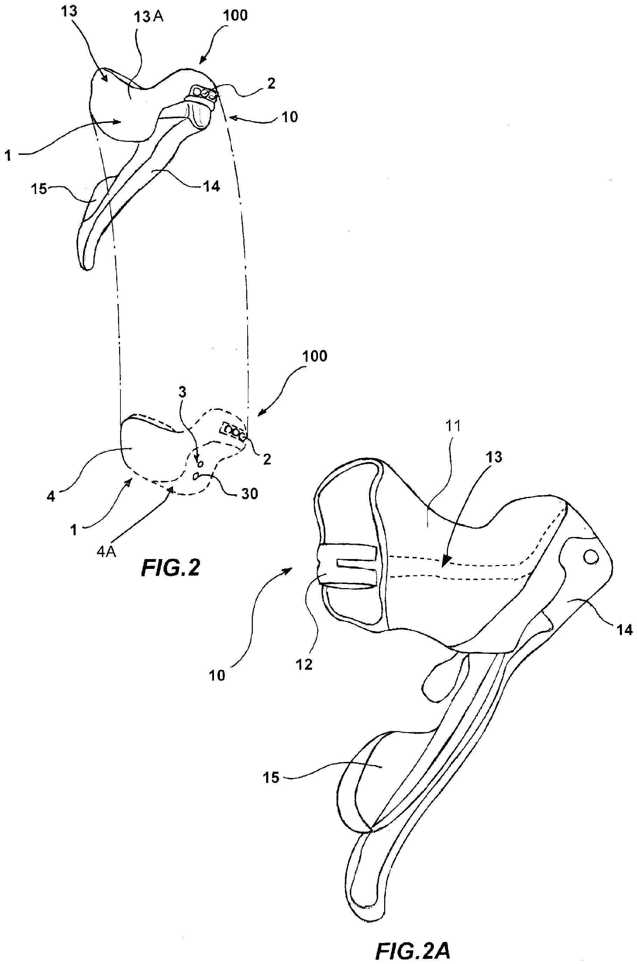

With reference initially to Figures 1 and 2, an assembly for a gear change control unit 10 of a bicycle according to the present invention is represented by reference number 100.

Preferably, the assembly 100 is intended to form a cover of the control unit 10. In preferred embodiments, it is removable and, preferably, it can replace a traditional covered casing of the shift assembly 10 of the gearbox.

In some embodiments, the control unit 10 is of the type commonly used in a racing bicycle that use an M shaped handlebar. Referring as well to Figure 2A, according to preferred embodiments, the control unit 10 comprises of a connecting portion 12 on the bicycle's M shaped handlebars, also known as drop handlebars, and support 13, preferably having a substantially horizontal development.

In some embodiments, the connection portion 12 is shaped as a ring that can be adjusted in size in order to be fixed to the handlebar. In some embodiments, when the control unit 10 is fixed to the handlebar, the supports 13 extends in substantially horizontal direction.

A control lever 14 for controlling the bicycle brake is connected in a hinged manner to the support 13. Preferably, on the control lever 14 at least one drive element 15 of the speed gear change is supported, allowing for the ability to shift gears according to known technique.

Referring again to Figure 2, the lighting assembly 100 comprises a connecting element 1 that allows for it to be connected in a removable way to a coupling portion 13A the support 13. According to some embodiments, the coupling portion 13A is formed by a covering casing 11 of the control unit 10.

In some embodiments, the support 13 is formed by a portion of the control unit that connects the connecting portion 12. The support 13 is shaped such that it comprises at least an oblong element that extends from the connecting portion 12 such that, when the control unit is fixed on the handlebar, the brave lever is hinged in a position remote from the handlebar. In this manner, the user can rest his hand on the support 13, in particular on the covering case, which is advantageously ergonomically shaped.

Furthermore, the assembly comprises a lighting device 2, an intermittent one, and a control unit 3 connected or connectible to the lighting device 2 in order to turn it on and/or off itself.

According to the claimed embodiments, the lighting device 2 comprises LED lights and is orange coloured so as to act as a turn signal, i.e. a left or right turn indicator.

In some embodiments, the LED lights, or more in general the lighting device 2, are housed in a rigid housing 20.

It should also be noted that the lighting device 2 may comprise more than one light source, as well as more than one of a different color. For example, there may be a light source intended as a turn signal and one or more intended to light up the surrounding street. These just mentioned light sources may possibly be steady, while the light that is intended for turn signaling should be intermittent.

In the claimed embodiments, the connecting element 1 is connected to the covering case 11 by way of shape coupling as will be better explained in the following. In this way, a connection is made between the covering case 11 and the control unit.

For this scope, the connecting element 1 comprises a flexible casing 4 shaped to match to at least a portion of the cover casing 11 of the control unit. In other words, the flexible casing 4 is fitted on a relative spot of the control unit 10.

In the claimed embodiments, the flexible covering 4 is capable of being deformed such that it can be fitted to a coupling portion 13A of the support 13 of the gear change control unit 10 by means of a shape coupling. In other word, the flexible covering 4 and the respective coupling portion are formed as a female and male element respectively and the deformability of the covering 4 allows for snap fitting the one onto the other.

As an example, the flexible casing 4 can be made of plastic and can take the shape of a cap with an opening into which the support can be at least partially housed.

In the claimed embodiments, the control unit 3 is fixed to the flexible casing 4. One can note that this way allows for the control unit 3 to be opportunely positioned in such a way to be easily reached by the user.

Preferably, the control unit 3 comprises of at least on push button 30 the could reached and clicked by one's finger.

Preferably for this scope, the connecting element 1 is positioned in such a way that the lighting device 2 is placed, while in use, above the support 13.

In fact, this position is fitting to be reached by the user's hand being that the control unit 10 is intended to be placed on the handlebars of the bicycle, without the light being covered by the user's hand when they grab on to the handlebars or the brake / gear change.

Generally, in the assembly, according to the present invention, the connecting element 1 is configured in such a way that the lighting device 2 is placed in a pushed out position with respect to the control lever 14 when the assembly 100 is connected to the control unit 10.

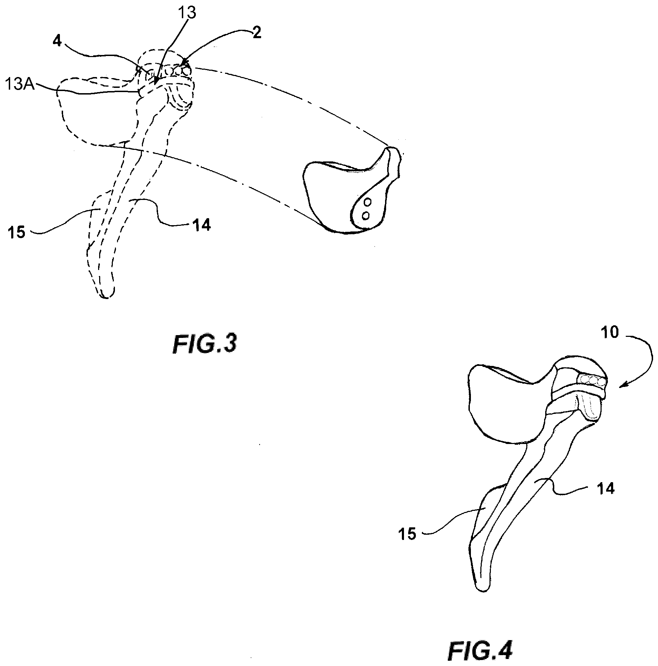

According to preferred embodiments, the assembly further comprises of a connecting device 6, schematically illustrated in the realization of figure 3A but also applicable here, consists of placing the assembly to the additional lighting device 5 in such a way that the control unit 3 simultaneously controls the turning on and/or off both of the lighting device 2 as well as the additional lighting device 5.

As you will see in more detail to follow, the additional lighting device 5 can be placed by itself respectfully to the lighting device 4, for example, corresponding to the back of the bicycle.

Preferably, the connecting device 6 can be wireless and with such a scope to be comprised of a transmitting/receiving unit, again wireless, for the transmission of the control signal generate by way of the control unit 3. In further detail, the produced signal can be received by additional lighting device 5 in order to for it to switch both on and off.

Referring now to Figure 3 according to another embodiment, the lighting device 2 and the control unit 3 can be part of the control unit 10 itself.

In other words, the control unit 10, as previously illustrated, comprises of a connecting slot 12 on the handlebars, at least one drive element 15 of the gear change and furthermore an assembly comprising the lighting device 2 and the control unit 3.

Figure 3 illustrates a control unit 10 intended to be used in a racing bicycle.

In the control unit 10 for a racing bike, the control lever 14 is hinged on the support 13 in such a way that while in use it expands downwards.

According to preferred embodiments, in the control unit 10 the lighting device 2 is intermittent as previously explained.

In preferred embodiments, the lighting device 2 is supported on the support 13 of the control unit, preferably the lighting device 2 extends while in use above the support 13. In this position, one can advantageously obtain maximum visibility by the lighting device 2.

It will be appreciated that in some embodiments, as e.g. shown in Figure 3, the coupling portion 13A is formed by an edge portion of the support 13 close to the hinge position of the lever 14. Accordingly, the support 13 may not include the cover casing which, on the contrary, can be formed by the flexible covering 4 per se. It will be appreciated that, in this case only a portion of the flexible covering 4 is shaped in a manner complementary to the coupling portion 13A, while the remaining part can be shaped in order to form the covering case 11.

In some embodiment, it can be provided for a different shape coupling rather than a male/female coupling as previously mentioned.

In addition, this position is particularly suitable for the lighting device 2 to generate a light beam that in use, is in the direction in which the bicycle/user is headed. It is also evident that in addition to the direction in which the user is headed, the light can illuminate that in which is surrounding the user.

Also in the present embodiment, the control unit 10 can comprise a connecting device 6 and a further light source 5, as previously described.

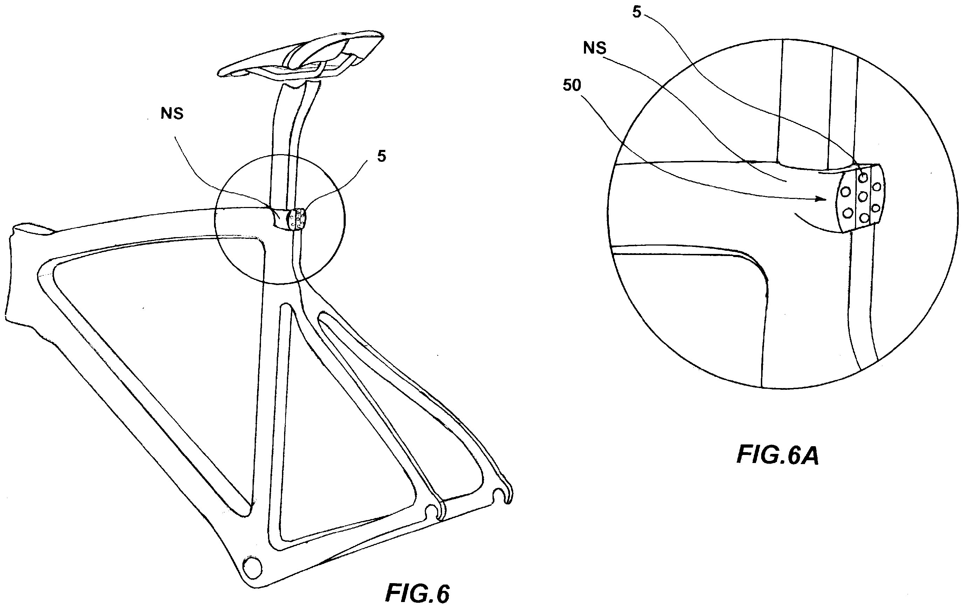

Referring to Figure 6, the assembly 100 of control unit 10 together with another lighting device 5 forms a lighting direction signaling system for a bicycle.

In preferred embodiments, such light signaling system is capable of forming light beams both in front of the bicycle as well as to the rear of the bicycle.

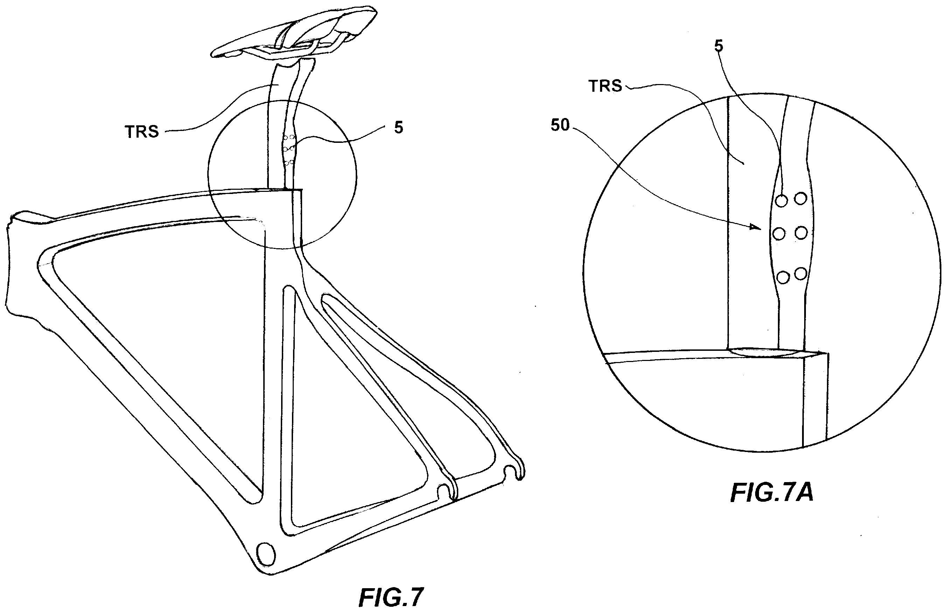

For such a scope, the additional lighting device 5 can be fixed to the bicycle in such a way that it produces a light beam, that while in use, go towards both the direction the bicycle is headed in as well as the rear. As illustrated in the examples in Figures 7 to 10, the frame and other components of the bicycle are foreseen by a housing portion 50 destined to hold the additional lighting device 5.

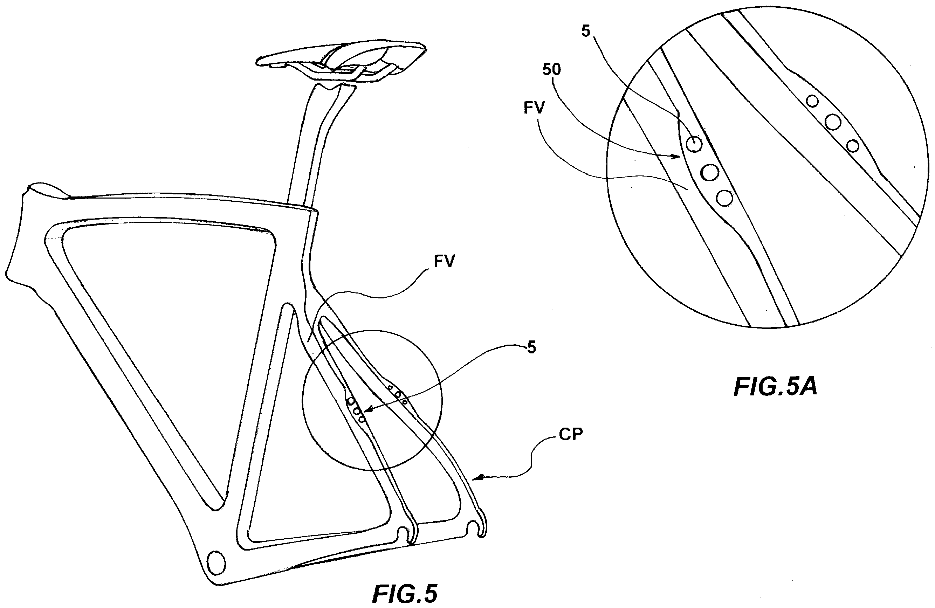

In Figure 5, the housing portion 50 is realized in correspondence with the seat stays FV of the rear triangle CP of the bicycle. Preferably, each seat stay comprises of another lighting device 5 intended to act as a left and right turn signal.

Referring now to Figure 6, the housing portion 50 is made to correspond with seat post NS.

In Figure 7, the housing portion 50 can also be made to correspond with post of the seat TRS.

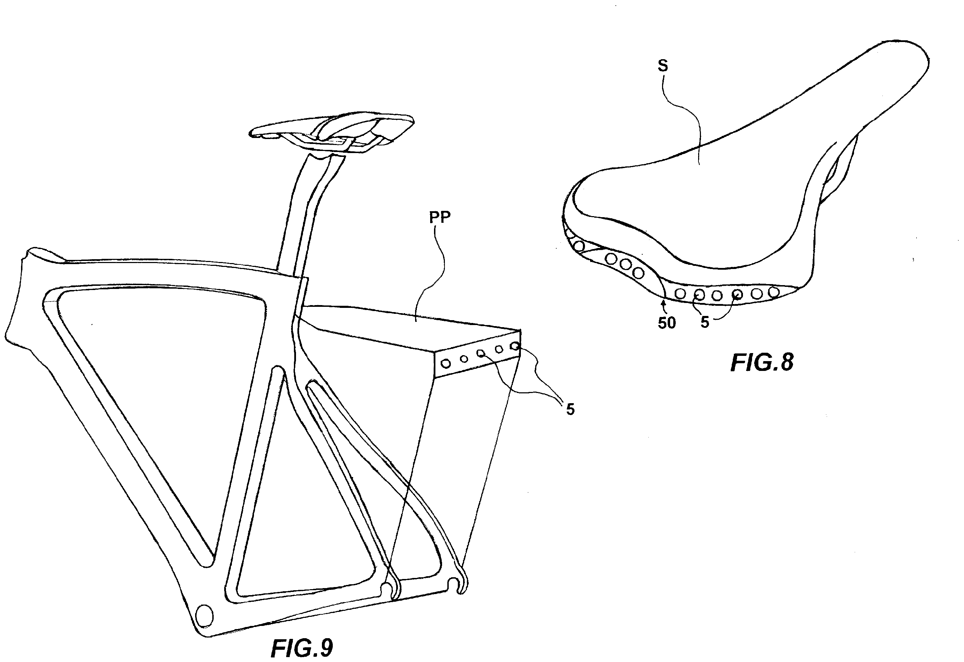

Alternatively, and as illustrated in Figure 8, the housing portion 50 is made to correspond with the seat S.

According to further embodiments, the additional lighting device 5 can also be fixed to elements external to the bicycle frame which, for example, may be accessories that can be fixed to the bicycle. An example is shown rear luggage carrier PP which can be fixed to the bicycle frame, illustrated in Figure 9.

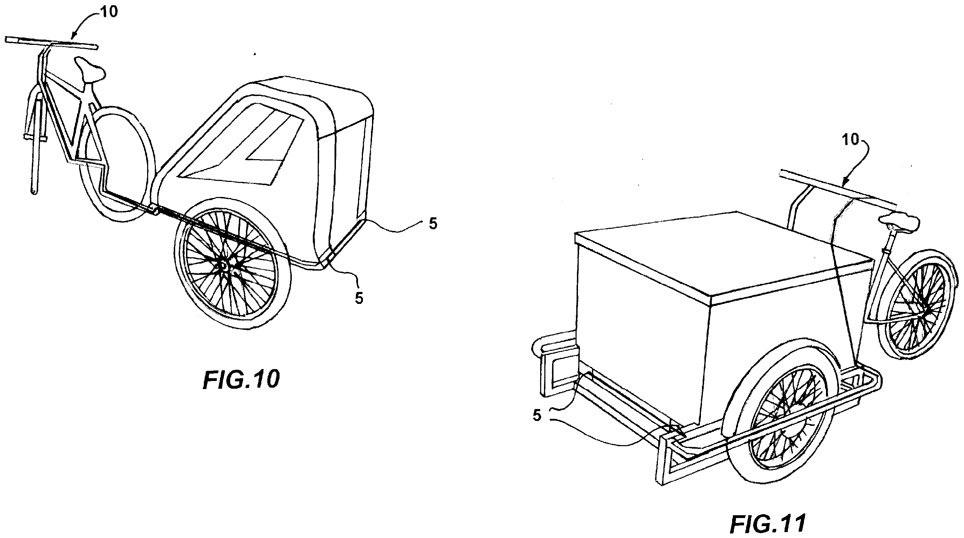

In a further embodiment, the additional lighting device 5 is fixed or fixable to a wagon towed by the bicycle or to a wagon which can be fixed to the front of the bicycle, as shown in Figures 10 and 11 respectively.

The invention thus solves the proposed problem, at the same time achieving a wide range of benefits including the possibility of creating a turn signal for the bicycle simply, with little visual hindrance and with a solution that allows retro-fitting of existing gear change control units for racing bicycles.

In addition, the present invention relatively contributes to increasing the cyclist's safety, as well as paying more attention respecting proper street conduct and to educating oneself about the rules of the road in general.

## Claims

1. Lighting assembly (100) for a gear change and brake control unit (10) for a bicycle of the type comprising a connecting portion (12) for connection to the handlebar (M) of the bicycle and a support (13) connected to the connecting portion (12) and a control lever (14) hinged to the support (13), the assembly (100) comprising a connecting element (1) for the removable connection of the assembly (100) to the support (13) of the control unit (10), a lighting device (2) housed in a rigid housing (20) and a control device (3) connected to said lighting device (2) for switching said device on and/or off, said connecting element (1) being configured such that the lighting device (2) is positioned in remote position with respect to the control lever (14) when the assembly (100) is connected to the control unit (10), wherein said connecting element (1) comprises a flexible covering (4) connected to said rigid housing (20) of the lighting device (2), said flexible covering (4) being capable of being deformed such that it can be fitted to a coupling portion (13A) of the support (13) of the gear change control unit (10) by means of a shape coupling, an opening (4A) being formed in said flexible covering (4) for allowing at least partial insertion of said coupling portion (13A), said lighting device (2) is intermittent, comprises LED lights and is orange coloured so as to act as a turn signal, **characterized in that** in that said control device (3) is directly fixed to said flexible covering (4).

2. Assembly according to any of the preceding claims, wherein the control unit comprises at least one push button.

3. Assembly according to any of the preceding claims, wherein the flexible covering (4) is shaped as a cap with an opening defined therein into which the support (13) can be at least partially housed.

4. Control unit (10) for a gear change and/or brake for a bicycle, comprising a connecting portion (12) for connection to a bicycle handlebar, a support (13) connected to the connecting portion (12), a covering case (11) covering at least partially the support (13) and/or the connecting portion (12), at least one gear change drive element (15) and a control lever (14) of the brake supported on said support (13), **characterized in that** it further comprises a lighting assembly (100) according to anyone of the preceding claims fitted by means of a shape coupling to a coupling portion (13A) of said support (13).

5. Control unit (10) according to claim 4, wherein said control device (3) is supported on said support (13).

6. Control unit (10) according to claim 4 or 5, wherein said lighting device is configured so as to generate a light beam directed towards to a front direction of the bicycle, when the control unit (10) is fixed to the handlebar.

7. Control unit (10) according to any one of claims 4 to 6, wherein said connecting portion (12) is formed as a ring, said support (13) being oblong shaped and extending from said connecting portion (12), said lighting device (2) being positioned such that it projects away from said support (13) in a direction transverse to a longitudinal direction of said support (13).

8. Light-signalling system for a bicycle, comprising a control unit (10) according to any one of claims 4 to 7, and a further lighting device (5) that is fixed or fixable to the bicycle so as to generate a light beam which, when in use, is directed to a rear direction of the bicycle.

## Patentansprüche

1. Beleuchtungsanordnung (100) für eine Gangschaltungs- und Bremssteuereinheit (10) für einen Fahrradtyp, der einen Verbindungsabschnitt (12) zur Verbindung mit der Lenkstange (M) des Fahrrads und einen mit dem Verbindungsabschnitt (12) verbundenen Träger (13) und einen am Träger (13) angelenkten Steuerhebel (14) aufweist, wobei die Anordnung (100) ein Verbindungselement (1) zur lösbaren Verbindung der Anordnung (100) mit dem Träger (13) der Steuereinheit (10), eine in einem starren Gehäuse (20) aufgenommene Beleuchtungsvorrichtung (2) und eine mit der Beleuchtungsvorrichtung (2) verbundene Steuervorrichtung (3) zum Ein- und/oder Ausschalten der Vorrichtung aufweist, wobei das Verbindungselement (1) eingerichtet ist, so dass die Beleuchtungsvorrichtung (2) in einer entfernten Position in Bezug auf den Steuerhebel (14) positioniert ist, wenn die Anordnung (100) mit der Steuereinheit (10) verbunden ist, wobei das Verbindungselement (1) eine flexible Abdeckung (4) aufweist, die mit dem starren Gehäuse (20) der Beleuchtungsvorrichtung (2) verbunden ist, wobei die flexible Abdeckung (4) in der Lage ist, verformt zu werden, so dass sie an einem Kupplungsabschnitt (13A) des Trägers (13) der Gangschaltungssteuereinheit (10) mittels einer Formkupplung angebracht werden kann, eine Öffnung (4A) aufweist, die in der flexiblen Abdeckung (4) ausgebildet ist, um das zumindest teilweise Einführen des Kupplungsabschnitts (13A) zu ermöglichen, wobei die Beleuchtungsvorrichtung (2) intermittierend ist, LED-Leuchten aufweist und orange gefärbt ist, um als Blinker zu wirken, **dadurch gekennzeichnet, dass** die Steuervorrichtung (3) direkt an der flexiblen Abdeckung (4) fixiert ist.

2. Anordnung nach einem der vorhergehenden Ansprüche, wobei die Steuereinheit zumindest einen Druckknopf aufweist.

3. Anordnung nach einem der vorhergehenden Ansprüche, wobei die flexible Abdeckung (4) als Kappe mit einer darin ausgebildeten Öffnung geformt ist, in der der Träger (13) zumindest teilweise aufgenommen werden kann.

4. Steuereinheit (10) für eine Gangschaltung und/oder Bremse für ein Fahrrad mit einem Verbindungsabschnitt (12) zur Verbindung mit einem Fahrradlenker, mit einem Träger (13), der mit dem Verbindungsabschnitt (12) verbunden ist, mit einem Abdeckungsgehäuse (11), das den Träger (13) und/oder den Verbindungsabschnitt (12) zumindest teilweise abdeckt, mit zumindest einem Antriebselement (15) für die Gangschaltung und einem Betätigungshebel (14) der Bremse, der auf dem Träger (13) abgestützt wird, **dadurch gekennzeichnet, dass** sie ferner eine Beleuchtungsanordnung (100) nach einem der vorhergehenden Ansprüche aufweist, die mittels einer Formkupplung an einem Kupplungsabschnitt (13A) des Trägers (13) angebracht ist.

5. Steuereinheit (10) nach Anspruch 4, wobei die Steuervorrichtung (3) auf dem Träger (13) abgestützt wird.

6. Steuereinheit (10) nach Anspruch 4 oder 5, wobei die Beleuchtungsvorrichtung eingerichtet ist, um einen Lichtstrahl zu erzeugen, der in eine vordere Richtung des Fahrrads gerichtet ist, wenn die Steuereinheit (10) an der Lenkstange fixiert ist.

7. Steuereinheit (10) nach einem der Ansprüche 4 bis 6, wobei der Verbindungsabschnitt (12) als Ring ausgebildet ist, wobei der Träger (13) länglich geformt ist und sich vom Verbindungsabschnitt (12) erstreckt, wobei die Beleuchtungsvorrichtung (2) positioniert ist, so dass sie vom Träger (13) in eine Richtung quer zu einer Längsrichtung des Trägers (13) hervorsteht.

8. Lichtsignalsystem für ein Fahrrad, das eine Steuereinheit (10) nach einem der Ansprüche 4 bis 7 und eine weitere Beleuchtungsvorrichtung (5) aufweist, die am Fahrrad fixiert oder fixierbar ist, um einen Lichtstrahl zu erzeugen, der bei Anwendung in eine hintere Richtung des Fahrrads gerichtet ist.

## Revendications

1. Ensemble d'éclairage (100) pour une unité de commande (10) de changement de vitesse et de frein pour une bicyclette, du type comprenant une partie de liaison (12) pour une liaison au guidon (M) de la bicyclette et un support (13) relié à la partie de liaison (12) et un levier de commande (14) articulé par rapport au support (13), l'ensemble (100) comprenant un élément de liaison (1) pour la liaison amovible de l'ensemble (100) au support (13) de l'unité de commande (10), un dispositif d'éclairage (2) logé dans un logement rigide (20) et un dispositif de commande (3) relié audit dispositif d'éclairage (2) pour allumer et/ou éteindre ledit dispositif, ledit élément de liaison (1) étant configuré de sorte que le dispositif d'éclairage (2) soit positionné dans une position distante par rapport au levier de commande (14) lorsque l'ensemble (100) est relié à l'unité de commande (10), dans lequel ledit élément de liaison (1) comprend un habillage flexible (4) relié audit logement rigide (20) du dispositif d'éclairage (2), ledit habillage flexible (4) étant capable d'être déformé de sorte qu'il puisse être emboîté sur une partie de couplage (13A) du support (13) de l'unité de commande (10) de changement de vitesse au moyen d'un couplage de forme, une ouverture (4A) étant formée dans ledit habillage flexible (4) pour permettre l'insertion au moins partielle de ladite partie de couplage (13A), ledit dispositif d'éclairage (2) est intermittent, comprend des lumières à DEL et est de couleur orange de façon à servir de clignotant, **caractérisé en ce que** ledit dispositif de commande (3) est directement fixé audit habillage flexible (4).

2. Ensemble selon l'une quelconque des revendications précédentes, dans lequel l'unité de commande comprend au moins un bouton poussoir.

3. Ensemble selon l'une quelconque des revendications précédentes, dans lequel l'habillage flexible (4) se présente sous la forme d'un capuchon ayant une ouverture définie en son sein dans laquelle le support (13) peut être au moins partiellement logé.

4. Unité de commande (10) pour un changement de vitesse et/ou un frein pour une bicyclette, comprenant une partie de liaison (12) pour une liaison à un guidon de bicyclette, un support (13) relié à la partie de liaison (12), un boîtier d'habillage (11) habillant au moins partiellement le support (13) et/ou la partie de liaison (12), au moins un élément d'entraînement de changement de vitesse (15) et un levier de commande (14) du frein portés sur ledit support (13), **caractérisée en ce qu'**elle comprend en outre un ensemble d'éclairage (100) selon l'une quelconque des revendications précédentes emboîté au moyen d'un couplage de forme sur une partie de couplage (13A) dudit support (13).

5. Unité de commande (10) selon la revendication 4, dans laquelle ledit dispositif de commande (3) est porté sur ledit support (13).

6. Unité de commande (10) selon la revendication 4 ou 5, dans laquelle ledit dispositif d'éclairage est configuré de façon à générer un faisceau de lumière dirigé vers une direction avant de la bicyclette, lorsque l'unité de commande (10) est fixée au guidon.

7. Unité de commande (10) selon l'une quelconque des revendications 4 à 6, dans laquelle ladite partie de liaison (12) se présente sous la forme d'une bague, ledit support (13) étant de forme oblongue et s'étendant à partir de ladite partie de liaison (12), ledit dispositif d'éclairage (2) étant positionné de sorte qu'il fasse saillie en éloignement par rapport audit support (13) dans une direction transversale à une direction longitudinale dudit support (13).

8. Système de signalisation lumineuse pour une bicyclette, comprenant une unité de commande (10) selon l'une quelconque des revendications 4 à 7, et un dispositif d'éclairage (5) supplémentaire qui est fixé ou apte à être fixé à la bicyclette de façon à générer un faisceau de lumière qui, lorsqu'il est utilisé, est dirigé vers une direction arrière de la bicyclette.
